# EUROPÄISCHE PATENTANMELDUNG

(11) **EP 1 223 414 A1**
(43) Veröffentlichungstag der Anmeldung: **17.07.2002**
(21) Anmeldenummer: 01100727.5
(22) Anmeldetag: 12.01.2001
(51) Int. Cl.: G01F 23/42, G01F 23/76

(54) **Anordnung zur Füllstandsanzeige und zur Belüftung von Mineralölfässern**

(71) Anmelder: Zöllner, Thomas, 80997 München (DE); Hagitte, Michael, 85247 Schwabhausen (DE); Kästner, Dirk, 01796 Pirna-Copitz (DE)
(72) Erfinder: Kästner, Dirk, 01796 Pirna-Copitz (DE)
(74) Vertreter: Pfeiffer, Eva

(57) **Zusammenfassung**

Die Erfindung betrifft eine Anordnung zur Füllstandsanzeige und Belüftung von Mineralölfässern, vorzugsweise von ca. 200 Liter Fassungsvermögen, welche in die vorhandenen, aber ungenutzten Entlüftungsöffnungen der Fässer eingebracht werden kann. Ihr liegt die Aufgabe zugrunde, eine Anordnung zur Füllstandsanzeige und Belüftung von Mineralölfässern zu finden, die eine exaktere Anzeige des Füllstandes als vergleichbare Anordnungen des Standes der Technik ermöglicht. Diese Aufgabe wird durch eine Anordnung gelöst, die in die vom Hersteller vorgesehene Belüftungsöffnung der Fässer installiert wird. Sie besteht aus einem Meß- und Anzeigegerät (3), einer flexiblen Verbindung (6) und einem Schwimmer (7), wobei in die ursprüngliche Belüftungsöffnung des Mineralölfasses (1) eine zylindrische Steckverbindung (5) eingepaßt ist, auf welcher das Anzeigegerät (3) und eine senkrechte Belüftungsöffnung (4) angeordnet sind und in deren Inneren die flexible Verbindung (6) aus dem Gehäuse des Anzeigegerätes (3) zum Schwimmer (7) verläuft. Dabei ist im Gehäuse des Anzeigegerätes (3) eine auf einer waagerechten Welle (8) gelagerte Spule (12) für die flexible Verbindung (6) angeordnet, wobei die Spule (12) mit einem auf der Welle (8) gelagertem Zahnrad (10) verbunden ist, das in ein auf einer Welle (17) gelagertes Zahnrad (16) eingreift, welches mit einer Feder (9) verbunden ist. Die Spule (12) ist weiterhin mit einem Zahnrad (11) verbunden, das außerhalb der Drehachse der Spule (12) an dieser befestigt ist und in ein auf der Welle (8) befindliches Zahnrad (14) und auf der Welle (8) gelagertes Zahnrad (15) eingreift, an dem der Zeiger (3.2) des Anzeigegerätes (3) befestigt ist. Der Schwimmer (7) weist einen zylinderförmigen Querschnitt auf, wobei der Schwimmer (7) außerhalb seines Schwerpunktes an der flexiblen Verbindung (6) befestigt ist.

## Beschreibung

Die Erfindung betrifft eine Anordnung zur Füllstandsanzeige und Belüftung von Mineralölfässern, vorzugsweise von ca. 200 Liter Fassungsvermögen, welche in die vorhandenen, aber ungenutzten Entlüftungsöffnungen der Fässer eingebracht werden kann.

Für große Kraftstoff- und Mineralöltankbehälter sind Füllstandsanzeigen bekannt, die nach unterschiedlichen technischen Prinzipien sehr aufwendig aufgebaut sind, wobei meistens mit einem, auf der Flüssigkeitsoberfläche aufliegenden Schwimmer gearbeitet wird. Die bekannten Füllstandsanzeigen für Tanks mit mehreren Tausend Litern Fassungsvermögen sind technisch sehr aufwendig und weisen keine Entlüftungsöffnungen auf.

Für Kunststoff-Heizöltanks ist in DE 295 13 005 eine nachrüstbare Füllstandfsanzeige beschrieben, welche jedoch das nachträgliche Einbringen einer Bohrung und das Aufkleben einer Teflon-Muffe erfordert, was ebenfalls zusätzlichen Aufwand verursacht. Deshalb ist die Anordnung dieser Füllstandsanzeigen an gängigen Mineralölfässern, bei denen es sich größtenteils um 200 Liter-Gebinde handelt, in der Praxis nicht realisiert.

Demgegenüber offenbart DE 297 08 451 eine Anordnung zur Füllstandsanzeige und zur Belüftung von Mineralölfässern, bei der ein auf dem Flüssigkeitspegel aufliegender Schwimmer über ein flexible Verbindung mit einem, über der vorgefertigten Belüfteröffnung des Flüssigkeitsbehälters angeordneten Meß- und Anzeigegerät verbunden ist, indem in die ursprüngliche Belüftungsöffnung eine zylindrische Steckverbindung eingepaßt ist. In der zylindrischen Steckverbindung befindet sich kurz über der Behälterabdeckung eine, mit einem senkrechten Sieb nach außen abgeschlossene neue Öffnung für die Behälterbelüftung. Durch die zylindrische Steckverbindung verläuft außerdem die flexible Verbindung von Anzeigegerät zum Schwimmer. Das über der Steckverbindung angeordnete Füllstands-Anzeigegerät besteht aus einem Gehäuse mit Anzeigefeld, in dessen Inneren eine waagerechte Welle, auf der eine Rückzugfeder, eine Spule für die Aufnahme der je nach Füllstand verkürzten oder verlängerten, flexiblen Verbindung zum Schwimmkörper sowie eine Getriebeschnecke mit senkrecht darüberliegendem Zahnrad hintereinander angeordnet sind. Die Abmessungen von Schnecke und Zahnrad sind so aufeinander abgestimmt, daß der über die flexible Verbindung auf die Welle übertragene Drehimpuls durch die Schnecke in eine Drehbewegung des Zahnrades so umgesetzt wird, daß die Höhenveränderung als entsprechende Volumenanzeige auf dem Anzeigefeld dargestellt wird.

Mittels dieser Anordnung ist es möglich, den Füllstand von Mineralölfässern mit geringerem Aufwand und vergleichsweise exakt zu bestimmen. Die Genauigkeit des Meßergebnisses ist jedoch durch die Verwendung herkömmlicher, das heißt hier vor allem kugelförmiger Schwimmer beschränkt. Überdies wird die Genauigkeit der Anzeige des Meßergebnisses von dem Zusammenwirken der Getriebeschnecke und des Zahnrades bestimmt. Hierbei ist zu berücksichtigen, daß bei einem derartigen Meßgerät, das, um für einen praktischem Einsatz in Betracht zu kommen, äußert preisgünstig hergestellt werden muß, nur geringe Anforderungen an die Präzision von Getriebeschnecke und Zahnrad gestellt werden können. Demnach werden, um dieser Forderung zu genügen, einfache Schnecken und Zahnräder eingesetzt, so daß der angezeigte Meßwert noch immer stark fehlerbehaftet ist. Der Fehler kann bis zu 20 Liter betragen, d. h. bereits bei einem vollen 200-Liter-Mineralölfaß betragt der Meßfehler ± 10 Prozent.

Es ist daher Ziel der vorliegenden Erfindung, die oben beschriebenen Nachteile des Standes der Technik zu überwinden. Dabei steht die Aufgabe, eine Anordnung zur Füllstandsanzeige und Belüftung von Mineralölfässern zu finden, die eine exaktere Anzeige des Füllstandes als vergleichbare Anordnungen des Standes der Technik ermöglicht.

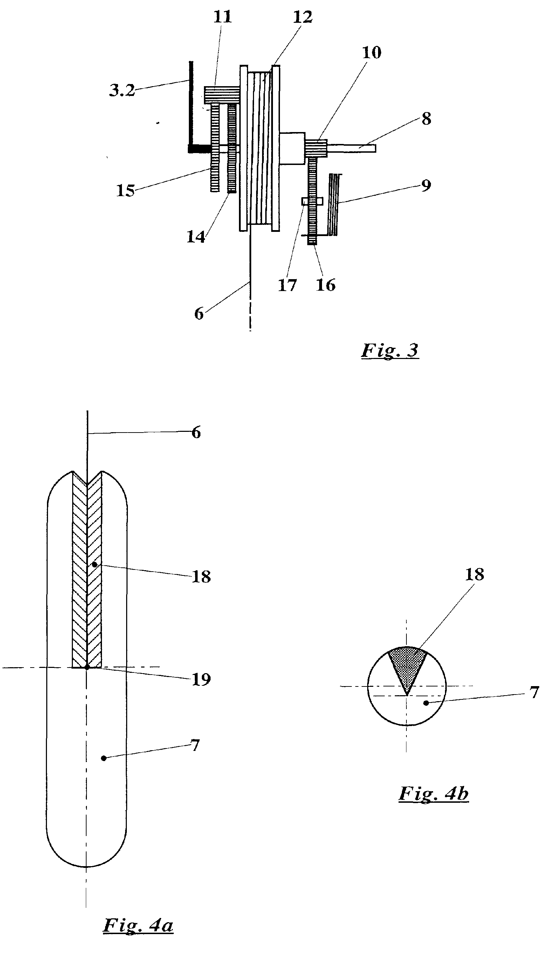

Erfindungsgemäß wird dies durch eine Anordnung zur Füllstandsanzeige und Belüftung von Mineralölfässern gelöst, die in die vom Hersteller vorgesehene Belüftungsöffnung der Fässer installiert ist. Diese Anordnung besteht aus einem Meß- und Anzeigegerät, einer flexiblen Verbindung und einem Schwimmer, wobei in die ursprüngliche Belüftungsöffnung des Mineralölfasses eine zylindrische Steckverbindung eingepaßt ist, auf welcher das Anzeigegerät und eine senkrechte Belüftungsöffnung angeordnet sind. Im Inneren des Anzeigegerätes verläuft die flexible Verbindung aus dem Gehäuse der Anzeigevorrichtung zum Schwimmer. Unter Verweis auf Fig. 3 ist die erfindungsgemäße Anordnung dadurch gekennzeichnet, daß im Gehäuse der Anzeigevorrichtung 3 eine auf einer waagerechten Welle 8 gelagerte Spule 12 für die flexible Verbindung 6 angeordnet ist. Die Spule 12 ist fest mit einem auf der Welle 8 gelagerten Zahnrad 10 verbunden, das in ein auf einer Welle 17 gelagertes Zahnrad 16 eingreift. Dieses Zahnrad 16 ist mit einer Feder 9 verbunden, um Federspannung zu erzeugen, wenn die flexible Verbindung von der Spule 12 abgewickelt wird. Die Spule 12 ist weiterhin mit einem Zahnrad 11 verbunden, das außerhalb der Drehachse der Spule 12 an dieser befestigt ist. Das Zahnrad 11 greift in ein auf der Welle 8 befindliches Zahnrad 14 und ein auf der Welle 8 gelagertes Zahnrad 15 ein, an dem der Zeiger 3.2 des Anzeigegerätes 3 befestigt ist. Weiterhin ist die erfindungsgemäße Anordnung dadurch gekennzeichnet, daß der Schwimmer 7 einen zylinderförmigen Querschnitt aufweist, wobei der Schwimmer 7 außerhalb seines Schwerpunktes auf seiner Mittelachse an der flexiblen Verbindung 6 befestigt ist. Dabei sind die Abmessungen und die Positionen von Spule 12, Zahnrad 11, Zahnrad 14 und Zahnrad 15 so aufeinander abgestimmt, daß der über die flexible Verbindung 6 auf die Spule 12, das Zahnrad 11 und das Zahnrad 15 übertragene Drehimpuls so übertragen wird, daß die Höhenveränderung des Schwimmers 7 als Volumenanzeige auf der Skala des Anzeigegerätes 3 dargestellt wird.

Mittels dieser Anordnung wird auf einfache Weise eine im Vergleich zu den Vorrichtungen des Standes der Technik wesentlich genauere Bestimmung des in einem Mineralölfaß enthaltenen flüssigen Mediums möglich. Wird die Anordnung auf einem Mineralölfaß angebracht, so daß der Schwimmer 7 durch die Belüftungsöffnung in das Faß hineingleiten kann, bis er die Oberfläche des flüssigen Mediums erreicht. Dabei übt er über die flexible Verbindung 6, die während des Falles des Schwimmers von der Spule 12 abgerollt wird, über das fest mit der Spule verbundene, auf der Welle 8 (drehbar) gelagerte Zahnrad 10 und auf das in Zahnrad 10 eingreifende, auf Welle 17 gelagerte Zahnrad 16 Kraft aus. Dieses Zahnrad ist außerhalb seines Drehpunktes mit der Rückzugsfeder 9 verbunden, die aufgrund der Drehbewegung des Zahnrades 16 beim Hinfallen des Schwimmers 6 in das Mineralölfaß gespannt wird. Somit wird die beim Hinabfallen des Schwimmers 6 erhaltene kinetische Energie als potentielle Energie in der Rückzugsfeder 9 gespeichert. Die Rückzugsfeder 9 ist dabei so ausgelegt, daß sie die flexible Verbindung unabhängig von der Falltiefe des Schwimmers 6 ständig im gespannten Zustand hält, ohne jedoch dabei die Lage des Schwimmers 6 zu verändern, das heißt, den Schwimmer wieder aus dem Mineralölfaß herauszuziehen. Wird der Schwimmer jedoch angehoben, beispielsweise weil der Füllstand des flüssigen Mediums im Mineralölfaß erhöht wird oder der Schwimmer 8 manuell aus dem Mineralölfaß entfernt wird, sorgt die Rückzugsfeder 9 über Zahnrad 15 und Zahnrad 10 dafür, daß die flexible Verbindung 6 wieder auf der Spule 12 aufgewickelt wird, so daß auch hier die flexible Verbindung 6 ständig im gespannten Zustand gehalten wird.

Gleichzeitig mit dem Spannen der Rückzugfeder 9 wird beim Hinabfallen des Schwimmers 6 in das Mineralölfaß der Drehimpuls über die Spule 12 auf ein an dieser, außerhalb seines Drehpunktes befestigten Zahnrades 11 auf ein auf Welle 8 gelagertes Zahnrad 15 übertragen, das in Zahnrad 11 eingreift. An Zahnrad 15 ist ein Zeiger befestigt, der auf der Skala der Anzeigevorichtung die Länge des von der Spule 12 abgewickelten, im gespannten Zustand gehaltenen flexiblen Verbindung 6 wiedergibt, wobei diese Länge als Füllstand auf der Skala dargestellt ist Dabei ist die Skala so gestaltet, daß bei vollständig abgespulter flexibler Verbindung 6 ein Füllstand von 0 Litern angegeben wird. In diesem Fall liegt der Schwimmer 7 auf dem Boden des Mineralölfasses auf, das heißt, das Faß ist leer. Ist das Faß jedoch gefüllt, wird nur eine sehr geringe Länge der flexiblen Verbindung 6 von der Spule 12 abgespult. Diese Länge entspricht dem Abstand des Faßdeckels von der maximalen Füllhöhe. In diesem Fall wird bei einem 200 Liter-Mineralölfaß ein Füllstand von 200 Litern angezeigt. Demnach entspricht die Länge der flexiblen Verbindung im wesentlichen der Höhe eines derartigen Mineralölfasses.

Die auf der Welle 8 befindlichen, Zahnräder 14, 15 und Zahnrad 11 sorgen für den exakten Zeigerausschlag.

Die Genauigkeit ist nicht nur von der Präzision der in dem Anzeigegerät enthaltenen Mechanik, sondern auch von der Art des verwendeten Schwimmers abhängig. Wie im Stand der Technik erläutert, werden bisher bei der Messung des Füllstands in Mineralölfässern kugelförmige Schwimmer verwendet. Der Durchmesser der Kugel wird von der Größe der Belüftungsöffnung des Fasses bestimmt, da der Schwimmer sonst nicht in das Faß eingeführt werden kann. Das zwingt zu der Verwendung relativ kleiner Schwimmer, der jedoch so schwer sein muß, daß er der Federspannung der Rückzugfeder widersteht, aber nicht so schwer sein darf, daß er nicht mehr auf der Oberfläche des in dem Faß enthaltenen flüssigen Mediums schwimmt. Dabei muß dieser Schwimmer zusätzlich auf definierte Art auf dem Medium aufliegen, um eine exakte Messung zu ermöglichen. Diesen Anforderungen werden sie jedoch nicht gerecht.

Demgegenüber weist der Schwimmer 7 der erfindungsgemäßen Anordnung einen zylinderförmigen Querschnitt auf, der dem Durchmesser der Belüftungsöffnung angepaßt ist, wobei der Schwimmer 7 außerhalb seines Schwerpunktes auf seiner Mittelachse an der flexiblen Verbindung 6 befestigt ist. Aufgrund der Lagerung außerhalb seines Schwerpunktes befindet sich der Schwimmer 7 im senkrechten Zustand, daß heißt, die Längsachse des Schwimmers verläuft senkrecht zur Oberfläche des in dem Faß befindlichen flüssigen Mediums. Trifft dieser Schwimmer 7 jedoch auf die Oberfläche des flüssigen Mediums auf, legt er sich waagerecht auf die Oberfläche des Mediums, das heißt, die Längsachse des Schwimmers verläuft waagerecht zur Oberfläche des in dem Faß befindlichen flüssigen Mediums. Wird der Schwimmer 7 von der Oberfläche wieder entfernt, richtet er sich wieder auf, da die auf ihn wirkenden Gewichtskräfte ihn in seine Gleichgewichtslage zwingen. Vorzugsweise weist der zylinderförmige Schwimmer 7 abgerundete Grundflächen auf. Überdies sollte der Schwimmer 7 aus einem Material bestehen, daß auf einem Medium mit einer Dichte von 0,8 bis 10,8 g/cm³ schwimmt.

Bei Verwendung dieses Schwimmers ist eine wesentlich genauere Messung der Füllstandshöhe möglich. Zum einen kann ein größerer Schwimmer verwendet werden, da die Größe der Belüftungsöffnung des Fasses nur den Querschnitt des Schwimmers, nicht aber dessen Länge bestimmt. Der Schwimmer der erfindungsgemäßen Anordnung liegt zudem waagerecht mit einer im Vergleich zu den bisher verwendeten Kugeln wesentlich größeren Querschnittsfläche auf der Flüssigkeitsoberfläche auf, was eine exaktere Bestimmung des Füllstandes ermöglicht.

Der Schwimmer 7 ist vorzugsweise so gestaltet, daß er einen parallel zur Längsachse verlaufenden Einschnitt 18 aufweist, der von einer der Grundflächen bis zur Mitte der Länge des Schwimmers 7 in Längsrichtung verläuft. Ist die flexible Verbindung 6 beispielsweise in der Mitte der Längs- und der Querachse des Schwimmers 7 befestigt, also am Schwerpunkt eines einschnittslosen zylinderförmigen Schwimmers, so verschiebt sich aufgrund des Einschnittes der Schwerpunkt des Zylinders von der Mitte der Längsachse nach außen, so daß der Schwimmer 7 sich im senkrechten Zustand zur Flüssigkeitsoberfläche befindet, solange er nicht auf diese auftrifft. Der Einschnitt ist so gestaltet, daß die flexible Verbindung 6 auf der Längsachse eines einschnittslosen zylinderförmigen Schwimmers verlaufen würde. Dazu geht die Tiefe des Einschnitts über die Längsachse des Schwimmers 7 hinaus. Wird somit der Schwimmer 7 von der Flüssigkeitsoberfläche angehoben, schwenkt er aus dem waagerechten Zustand in den senkrechten Zustand, wobei der einschnittslose Abschnitt nach unten und der mit einem Einschnitt versehene Abschnitt des Schwimmers nach oben gerichtet ist. In diesem Einschnitt verläuft dann die flexible Verbindung in lotrechter Weise.

Der Einschnitt kann beispielsweise einen U- oder V-förmigen Querschnitt aufweisen.

Der Schwimmer besteht vorzugsweise aus einem Kunststoffgemisch mit einer Dichte von 0,82 bis 0,85 g/cm³. Dabei taucht der Schwimmer nur bis maximal Durchmesser-Linie in Öl ein.

Die Belüftungsöffnung ist so gestaltet, daß keine Verunreinigungen in das Innere des Behälters gelangen können.

Im folgenden wird die Erfindung anhand eines Ausführungsbeispiels mit Bezug auf die beiliegenden Zeichnungen näher erläutert. Dabei zeigt
Fig. 1 das Prinzip der Anordnung mit Schwimmer und Anzeige;
Fig. 2 das Anzeigegerät mit Belüftungsöffnung und Steckverbindung;
Fig. 3 die Anordnung der Bauteile im Gehäuse des Anzeigegerätes und
Fig. 4 den zylinderförmigen Schwimmer.

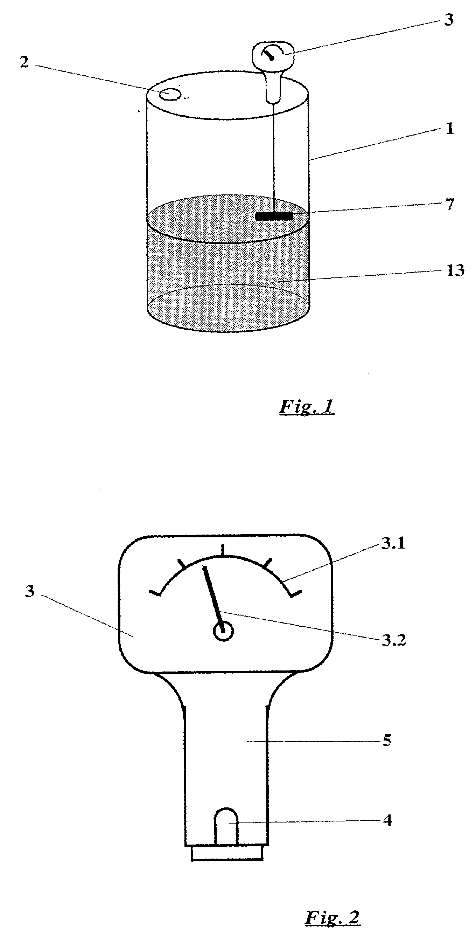

In Fig. 1 ist ein Behälter 1, beispielsweise ein 200-Liter-Mineralölfaß, mit einer Öffnung 2 für eine Behälterpumpe dargestellt. In diesem Behälter 1 befindet sich ein flüssiges Medium 13, beispielsweise Mineralöl, dessen Füllhöhe mittels der erfindungsgemäßen Anordnung bestimmt wird. Dazu ist das Anzeigegerät 3 über die Steckverbindung 5 auf die ursprüngliche Belüftungsöffnung des Behälters 1 aufgesetzt. Das Anzeigegerät 3 ist über die flexible Verbindung 6 mit dem Schwimmer 7 verbunden, der (waagerecht) auf der Flüssigkeitsoberfläche aufliegt.

Das in Fig. 2 dargestellte Anzeigegerät 3 ist auf der zylinderförmigen Steckverbindung 5 befestigt. Diese Steckverbindung 5 weist eine Belüftungsöffnung mit Sieb 4 auf, so daß auch bei auf dem Behälter 1 luftdicht angebrachter Steckverbindung 5 der Behälter 1 nicht verschlossen ist. Das Anzeigegerät 3 weist eine Skala 3.1 und einen Zeiger 3.2 auf.

Dieser Zeiger 3.2 ist, wie in Fig. 3 dargestellt, mit einem auf der Welle 8 gelagerten Zahnrad 15 verbunden, das in Zahnrad 11 eingreift. Dieses Zahnrad 11 ist fest außerhalb des Drehpunktes der Spule 12 befestigt. Gleichzeitig greift das Zahnrad 11 in das fest auf der Welle 8 befestigte Zahnrad 14 ein, so daß sich bei Ab- oder Aufwickeln der flexiblen Verbindung Zahnrad 11 um das Zahnrad 14 dreht. Dieser Drehimpuls wird mittels definierter Übersetzung auf Zahnrad 15 übertragen. Die Spule 12 ist weiterhin fest mit einem Zahnrad 10, das ebenfalls auf Welle 8 gelagert ist verbunden. Dieses Zahnrad 10 greift in ein auf Welle 17 gelagertes Zahnrad 16 ein. Zahnrad 16 ist außerhalb seines Drehpunktes mit einer Rückzugfeder 9 verbunden. Wird demnach die flexible Verbindung 6 abgespult, dreht sich die Spule 12 auf der Welle 8 und damit das Zahnrad 10. Dieses Zahnrad 10 bewegt Zahnrad 16, wodurch die Rückzugfeder 9 gespannt wird. Gleichzeitig bewegt das an der Spule 12 befestigte Zahnrad 11 Zahnrad 15 und damit den Zeiger 3.2 des Anzeigegerätes.

In Fig. 4a ist der aufgerichtete zylinderförmige Schwimmer 7 von vorn, in Fig. 4b von oben dargestellt. Der Schwimmer 7 weist einen parallel zur Längsachse verlaufenden Einschnitt 18 auf, der von einer der Grundflächen bis zur Mitte der Länge des Schwimmers 7 in Längsrichtung verläuft. Dabei geht die Tiefe des Einschnitts 18 über die Längsachse des Schwimmers 7 hinaus. In der Mitte der Längsachse und der Mitte der Querachse ist, wenn ein einschnittsloser Schwimmer als Maßstab verwendet wird, das heißt in dessen Schwerpunkt, der Schwimmer 7 (mit Einschnitt) mit der flexiblen Verbindung 6 verbunden, so daß aufgrund des Einschnittes 18 der Schwimmer 6 außerhalb seines Schwerpunktes gelagert ist. Demnach richtet sich der Schwimmer 7 auf, wenn er aus der Flüssigkeit herausgehoben wird, auf der er waagerecht aufliegt.

Die verwendeten Bezugszeichen bedeuten:
- 1: Behälter bzw. Mineralölfaß
- 2: Öffnung für die Behälterpumpe
- 3: Anzeigegerät mit Skala (3.1) und Zeiger (3.2)
- 4: Belüftungsöffnung
- 5: Steckverbindung
- 6: Flexible Verbindung
- 7: Schwimmer
- 8: Welle
- 9: Feder
- 10: Zahnrad
- 11: Zahnrad
- 12: Spule
- 13: Medium
- 14: Zahnrad
- 15: Zahnrad
- 16: Zahnrad
- 17: Welle
- 18: Einschnitt
- 19: Bohrung für flexible Verbindung

## Patentansprüche

1. Anordnung zur Füllstandsanzeige und Belüftung von Mineralölfässern, welche in die vom Hersteller vorgesehene Belüftungsöffnung der Fässer installiert ist, bestehend aus einem Meß- und Anzeigegerät (3), einer flexiblen Verbindung (6) und einem Schwimmer (7), wobei in die ursprüngliche Belüftungsöffnung des Mineralölfasses (1) eine zylindrische Steckverbindung (5) eingepaßt ist, auf welcher das Anzeigegerät (3) und eine senkrechte Belüftungsöffnung (4) angeordnet sind und in deren Inneren die flexible Verbindung (6) aus dem Gehäuse des Anzeigegerätes (3) zum Schwimmer (7) verläuft, **dadurch gekennzeichnet, daß**
im Gehäuse des Anzeigegerätes (3) eine auf einer waagerechten Welle (8) gelagerte Spule (12) für die flexible Verbindung (6) angeordnet ist, wobei die Spule (12) fest mit einem auf der Welle (8) gelagertem Zahnrad (10) verbunden ist, das in ein auf einer Welle (17) gelagertes Zahnrad (16) eingreift, welches mit einer Feder (9) verbunden ist; und die Spule (12) weiterhin mit einem Zahnrad (11) verbunden ist, das außerhalb der Drehachse der Spule (12) an dieser befestigt ist und in ein auf der Welle (8) befindliches Zahnrad (14) und auf der Welle (8) gelagertes Zahnrad (15) eingreift, an dem der Zeiger (3.2) des Anzeigegerätes (3) befestigt ist;
und daß
der Schwimmer (7) einen zylinderförmigen Querschnitt aufweist, wobei der Schwimmer (7) außerhalb seines Schwerpunktes an der flexiblen Verbindung (6) befestigt ist.

2. Anordnung nach Anspruch 1, **dadurch gekennzeichnet, daß** die Abmessungen und die Positionen von Spule (12), Zahnrad (11), Zahnrad (14) und Zahnrad (15) so aufeinander abgestimmt sind, daß der über die flexible Verbindung (6) auf die Spule (12), das Zahnrad (11) und das Zahnrad (15) übertragene Drehimpuls so übertragen wird, daß die Höhenveränderung des Schwimmers (7) als Volumenanzeige auf der Skala des Anzeigegerätes (3) dargestellt wird.

3. Anordnung nach Anspruch 1 oder Anspruch 2, **dadurch gekennzeichnet, daß** der Schwimmer (7) mit zylinderförmigem Querschnitt einen parallel zur Längsachse verlaufenden Einschnitt (18) zur Aufnahme der flexiblen Verbindung (6) aufweist, der von einer der Grundflächen bis zur Mitte der Länge des Schwimmers (7) in Längsrichtung verläuft.

4. Anordnung nach Anspruch 3, **dadurch gekennzeichnet, daß** die Tiefe des Einschnitts (18) über die Längsachse des Schwimmers (7) hinausgeht.

5. Anordnung nach einem der vorstehenden Ansprüche, **dadurch gekennzeichnet, daß** der Schwimmer eine Dichte aufweist, so daß er auf einem Medium mit einer Dichte von 0,8 bis 10,8 schwimmt.
